# EUROPEAN PATENT APPLICATION

(11) **EP 3 331 249 A1**
(43) Date of publication of application: **06.06.2018**
(21) Application number: 16201835.2
(22) Date of filing: 02.12.2016
(51) Int. Cl.: H04N 21/472

(54) **ELECTRONIC PROGRAMME GUIDE DATA PRESENTATION DEVICE AND METHOD**

(71) Applicant: Advanced Digital Broadcast S.A., 1292 Chambesy (CH)
(72) Inventor: Wielgosz, Marcin, 65-119 Zielona Gora (PL)
(74) Representative: Kancelaria Eupatent.pl Sp. z.o.o

(57) **Abstract**

A computer-implemented method for presenting and navigating content data in a device configured to receive a plurality of content events, the method comprising performing the following steps within the device: determining available events that can be received by the device and receiving, from a data provider (170) accessible over a network (190), content description data for the available events (701); determining (702) gaps in content description data; presenting (703) the content description data in a form of a grid having a timeline axis (X) and a channel axis (Y), wherein cells represent content events available on particular channel at particular time and are selectable by specifying a focus position (607); and allowing the user to navigate (704) via the grid, and displaying a current window (601) comprising a focus position (607) and surrounding cells, wherein the channels which do not comprise content description data for a currently selected focus position (607) on the timeline are hidden.

## Description

### TECHNICAL FIELD

The present disclosure relates to presentation and navigation through Electronic Program Guide (EPG) data, in particular to presentation of historical EPG data for past events.

### BACKGROUND

With the development of modern audio/video technologies, people can instantly access large amount of content at any given time from various sources. A well-known method of presenting available content is a grid-type electronic programme guide (EPG) or interactive program guide (IPG), which typically has a timeline along its X axis and lists available channels on a Y axis, wherein content events available at a particular channel at a particular time are presented in cells within the grid. A focus tool can be provided that marks the currently selected event and the user may move the focus tool to select another event of interest, typically using arrow buttons of a remote control unit (RCU).

Sometimes there is a need to browse through a historical data of the EPG in order to see what events were broadcast in the past. The past events may be stored in the memory of a user device (e.g. a hard disk drive, HDD) or a remote service (a so-called catch-up service) and retrieved for watching. However, the EPG data is often not cached for all channels or all events for a particular channel. Therefore, during browsing of the historical data, the EPG may comprise many empty spaces (gaps), corresponding to events which are not cached and cannot be retrieved. The same problem relates to events that are to be broadcast in future, but are not accessible to the user, such as paid events or parental control restricted events.

Therefore, there is a need to improve the way in which the historical EPG data is presented for past events to the user in order to navigate it in a more convenient manner.

### SUMMARY

There is disclosed a computer-implemented method for presenting and navigating content data in a device configured to receive a plurality of content events, the method comprising performing the following steps within the device: determining available events that can be received by the device and receiving, from a data provider accessible over a network, content description data for the available events; determining gaps in content description data; presenting the content description data in a form of a grid having a timeline axis and a channel axis, wherein cells represent content events available on particular channel at particular time and are selectable by specifying a focus position; and allowing the user to navigate via the grid, and displaying a current window comprising a focus position and surrounding cells, wherein the channels which do not comprise content description data for a currently selected focus position on the timeline are hidden.

The available events may comprise past events available from at least one of: a catch-up service, a local storage at the device or other devices accessible via a network.

The method may comprise receiving from the user an input to navigate along the time axis and, in case there is an adjacent event available, moving the focus position to the adjacent event and otherwise moving the focus position by a selected time slot.

The method may comprise receiving from the user an input to navigate along the channel axis and moving the focus position to the next channel for which an event is available for the current focus position on the timeline.

There is also disclosed a non-transitory computer readable storage medium comprising instructions that, when executed by a computer, enable generating a video stream in accordance with the method as disclosed above.

There is also disclosed a device comprising: a network interface configured to allow communication with external services over a network; a controller configured to generate a graphical user interface; an EPG management unit configured to communicate with an EPG data provider to receive content description data; an EPG presentation unit configured to: determine available events that can be received by the device and receiving, from a data provider accessible over a network, content description data for the available events; determine gaps in content description data; present the content description data in a form of a grid having a timeline axis and a channel axis, wherein cells represent content events available on particular channel at particular time and are selectable by specifying a focus position; and allow the user to navigate via the grid, and displaying a current window comprising a focus position and surrounding cells, wherein the channels which do not comprise content description data for a currently selected focus position on the timeline are hidden.

### BRIEF DESCRIPTION OF DRAWINGS

The disclosure is accompanied by the drawing, wherein:
Fig. 1 presents an overview of a general content distribution system.
Fig. 2 presents an overview of a content distribution system at a user premises.
Fig. 3 presents a block diagram of a mobile device at which the content presentation system can be implemented.
Fig. 4 presents a block diagram of a set top box device at which the content presentation system can be implemented.
Fig. 5A-5F present examples of a standard EPG data display.
Figs. 6A-6G present examples of an EPG data display according to the present invention.
Fig. 7 presents a method for presentation of the EPG data.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

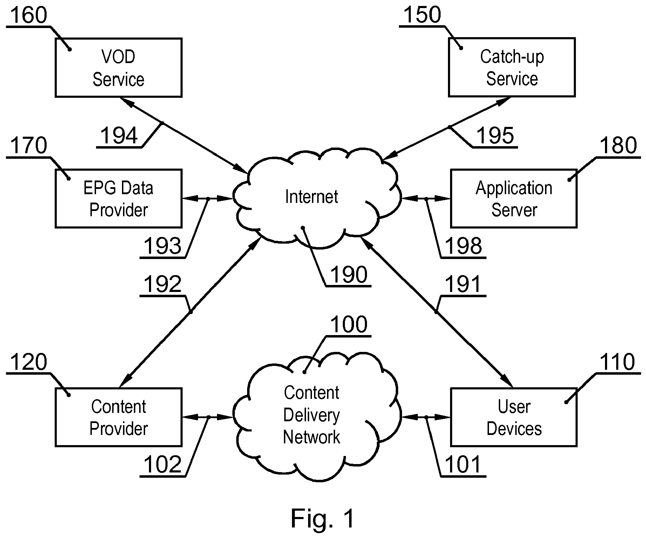

Fig. 1 presents an overview of a general content distribution system. Content can be provided to user devices 110 by various distributors from various sources. A content provider 120 may provide linear TV content, such as time-and-channel based television, live broadcasts etc., to a content delivery network 100, which may be broadcast, multicast or unicast. The user is connected with the content delivery network via a transmission channel 101, such as a QAM, Satellite, Terrestrial, IP multicast network or other type of network. Additional services are available to the user devices 110 linked via a transmission channel 191 with the Internet 190 (or through the content provider 120 connected via a transmission channel 192 with the Internet and via a transmission channel 102 with the content delivery network 100) and include at least some of the following.

A catch-up service 150 is configured to provide, via a transmission channel 195, retransmission of the content that has been already broadcast as linear TV, in order to allow the users to watch it a few hours or even days later.

A Video on Demand (VOD) service 160 is configured to provide, via a transmission channel 194, pre-recorded content on request.

An Electronic Program Guide (EPG) data provider 170 is configured to provide, via a transmission channel 193, additional data about content available from various sources, including the content available from the content delivery network 100 and the other content providers 150, 160. The data related to past events (which may be available from the catch-up service or from the local storage of the user device) will be called herein historical EPG data.

An application server 180 is configured to provide, via a transmission channel 198, various types of software applications, including the application to present EPG data as described herein, to be executed at the user devices 110.

The transmission channels 191-195 may be of any known type, such as wired or wireless, using transmission technologies suitable to carry data of a particular service.

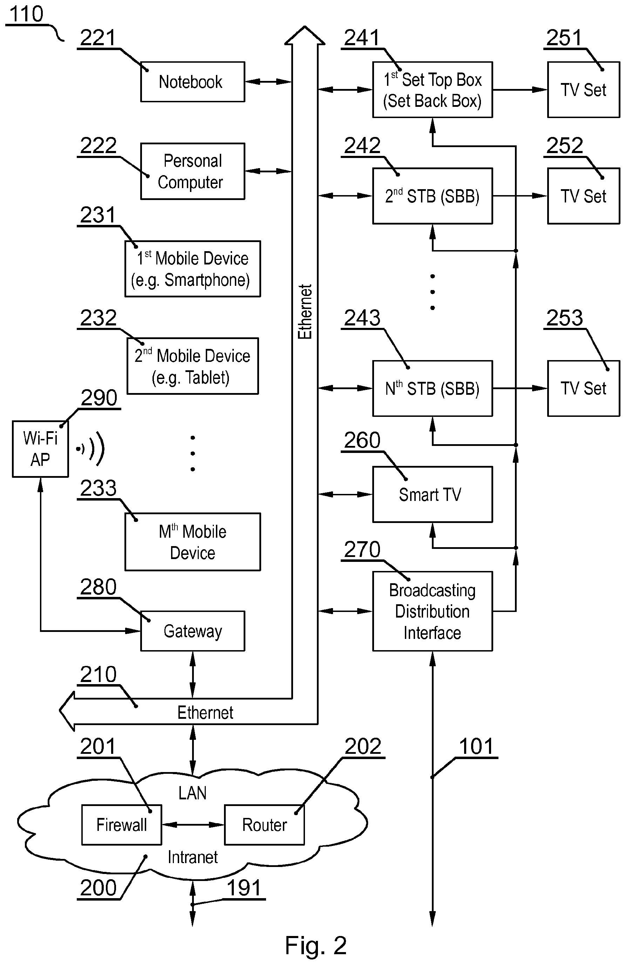

Fig. 2 presents an overview of a content distribution system at a user premises, such as at home or at an office. The user devices are connected to an Intranet - a local area network (LAN) 200 via an interface such as Ethernet (IP) 210, which is connected with the Internet 190 via the transmission channel 191. The LAN 200 preferably includes a firewall 201 and a router 202 configured to secure and coordinate data transmission. A gateway 280 may provide access to the Intranet 200 via a wireless access point (AP) 290, such as in Wi-Fi technology. A plurality of devices may be used in the user premises. Some of the devices may be mobile devices, such as a smartphone 231, a tablet 232 or another type of device 233. Other devices may be mobile or stationary and include devices such as a notebook computer 221, a personal computer 222, a Set Top Box (STB) or a Set Back Box (SBB) 241, 242, 243 connected to a television set 251, 252, 253, or a smart television set 260. A broadcasting distribution interface 270 may receive content from the content delivery network 100 via the transmission channel 101 and distribute it to the other devices via direct links or via the Ethernet interface.

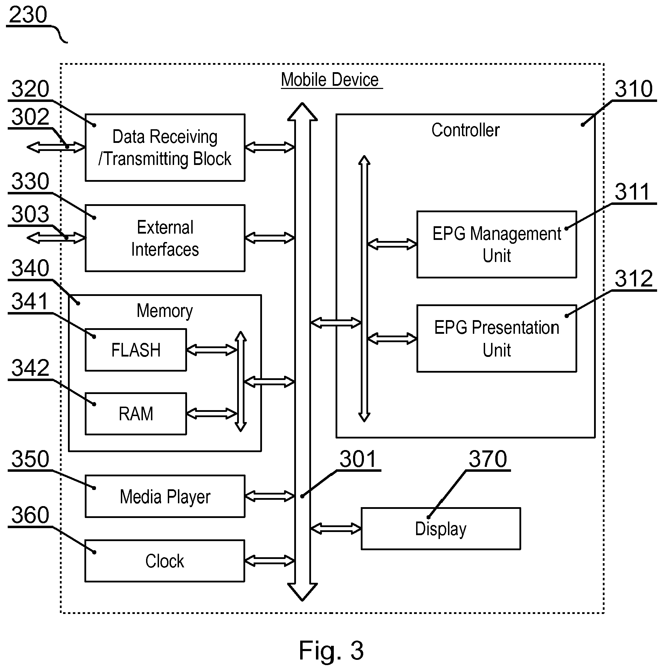

Fig. 3 presents a block diagram of a mobile device 230, such as a tablet or smartphone, or a smart television, a notebook or a personal computer, at which the content presentation system can be implemented, and wherein mainly the elements essential for operation of the system of the invention are shown.

A data receiving/transmitting block 320 is configured to communicate, via at least one transmission channel 302, with the Ethernet (IP) network 210 or the wireless network, in order to receive content or EPG data. The device may further comprise external interfaces 330 to communicate, via at least one communication channel 303, with other devices or accessories.

A controller 310 comprises a plurality of units configured to provide the functionality of the system as described herein. An EPG management unit 311 is configured to communicate with the EPG data provider 170 to receive content description data. An EPG presentation unit 312 is configured to generate a grid of the EPG data according to the information from the EPG management unit 311.

The EPG management unit 311 may be configured to first determine the events that are available for retrieval from available sources (such as past events from the catch-up service 150 or local storage of other user devices 221, 241-243, 260, or future events depending on parental control level of the current user) and collect the EPG data from the EPG data provider 170 only for those available events.

The controller 310 operates utilizing memory blocks 340, including RAM 342 and Flash 341 blocks.

A clock module 360 is configured to provide actual time in order to properly hide or reveal channels which do not possess some portions of the EPG data.

A media player 350 is an example of a content presentation block that is configured to decode the received content and convert it to audio/video format suitable for presentation to the user.

The mobile device 230 typically includes its own display 370 for presenting content, typically a touch-type display which thereby also functions as an input controller.

All modules of the device communicate with each other via one or more internal data buses 301.

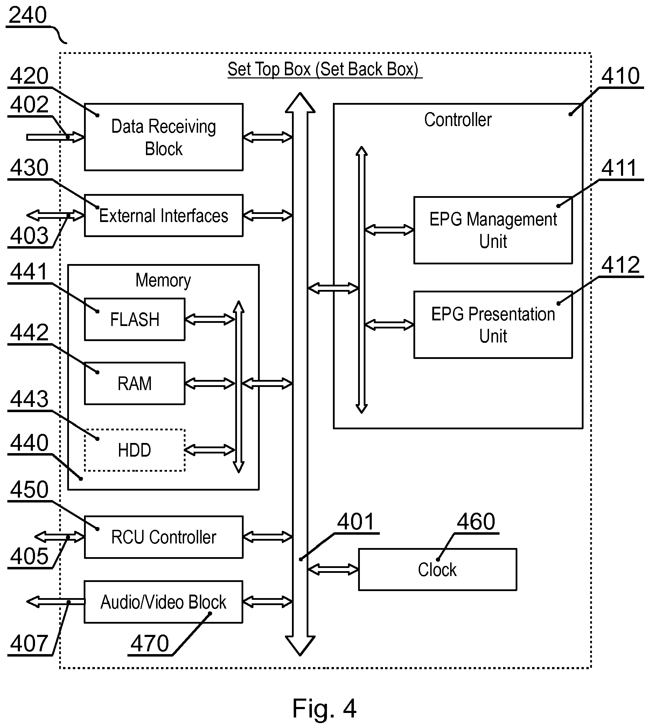

Fig. 4 presents a block diagram of a stationary device, such as a set top box or a set back box 240, at which the content presentation system can be implemented, and wherein mainly the elements essential for operation of the system of the invention are shown.

The elements 401, 410, 440, 460 are equivalent to the elements 301, 310, 340, 360 described with reference to the mobile device 230 of Fig. 3.

In addition, the memory block 440 may further comprise a hard disk drive (HDD) 443 or another type of mass storage that can be used to store video or other data locally at the device, but is not essential for its operation. The EPG management unit 411 may be further configured to determine the past events that are cached at that local storage 443.

A data receiving block 420 is configured to receive downstream data, such as video content, from the broadcasting distribution interface 270 via a channel 402 (101). The data receiving block 420 (also called a front-end block) may comprise a plurality of tuners (such as satellite, cable, terrestrial or IPTV tuners), wherein one of the tuners receives content to be displayed at the television screen to which the device is directly connected (e.g. the STB 241 connected to the TV set 251) and another tuner receives content to be recorded at the HDD 443.

External interfaces 430, such as the Ethernet interface, are configured to communicate, via at least one transmission channel 403, with the Ethernet (IP) network 210 or the wireless network.

The device is operable by the user via a remote control unit (RCU) that communicates, typically via a wireless transmission channel 405, with a RCU controller block 450.

An audio/video block 470 is an example of a content presentation block and configured to decode the received content, convert it to an audio/video format suitable for presentation to the user, and transmit the converted content via a transmission channel 407 to a TV set to which the device is directly connected.

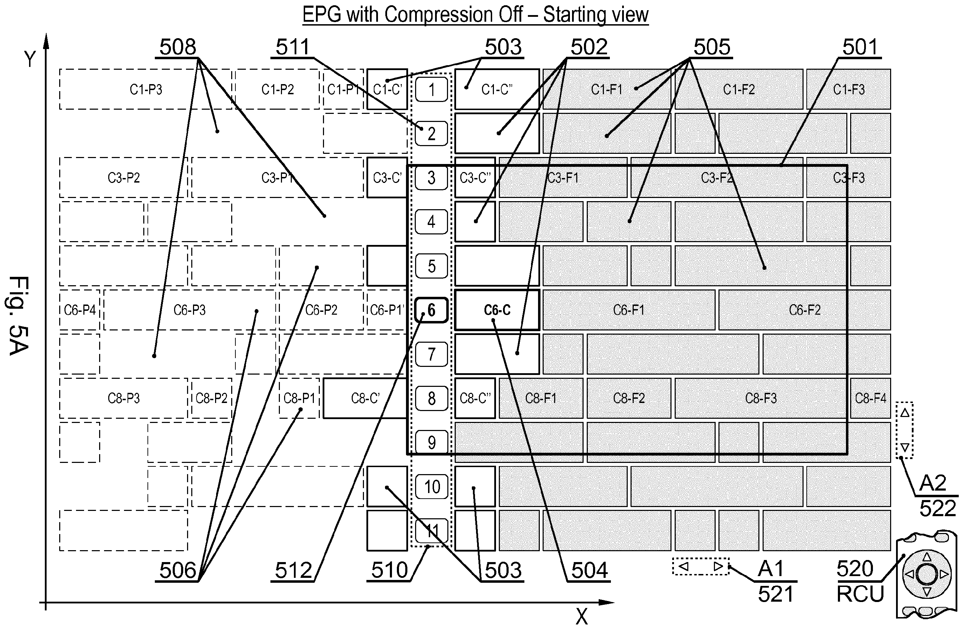

Fig. 5A-5F present examples of a standard EPG data grid display. A standard EPG display (presenting available content in a grid-type manner) typically has a timeline along its X axis and it lists available channels on a Y axis, wherein events (programmes) available at a particular channel at a particular time are presented in cells within the grid. Duration of the programme relates to the length of the particular cell.

Fig. 5A presents a standard starting view for a grid, wherein the window 501 covers the portion of the whole grid that is visible to the user on screen. Cells 502 represent currently broadcast events. Cells 503 represent events that started some time before the current time and are currently broadcast. Cell 504 represents the current focus position, i.e. the event selected for viewing currently. As the user navigates the focus 504, the visible region 501 can be shifted along the grid. Cells 505 represent future events, i.e. events that will be broadcast in future and for which EPG data is available and accessible to the user. Cells 506 represent past events, i.e. events that were broadcast in the past, for which EPG data is available and accessible to the user and which are available from at least one of: a catch-up service 150, a local storage at the device 443 or other devices 231-233, 221-222, 241-243, 260 accessible via the network 210. As mentioned before, not all channels have their EPG data cached or only some types of EPG data (individual events) are cached. Regions which do not have EPG data form gaps 508 within the grid. A list 510 of channels 511 is also available. The currently selected (focused) channel 512 can be marked. This kind of EPG is typically navigated by a remote control unit (RCU) 520 with arrow keys: using left-right arrow keys 521 to navigate along one axis A1 (typically, the X axis) and up-down arrow keys 522 to navigate along the other axis A2 (typically, the Y axis).

The events are indicated as:
- Cx-C - current event on channel x (which may have a past portion C' and future portion C")
- Cx-Py - past event y on channel x
- Cx-Fy - future event y on channel x

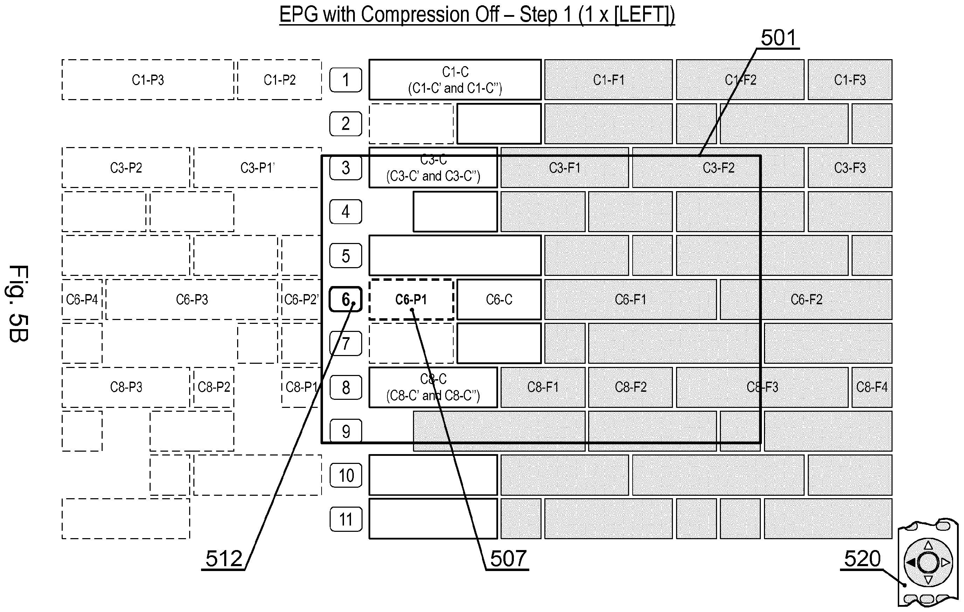

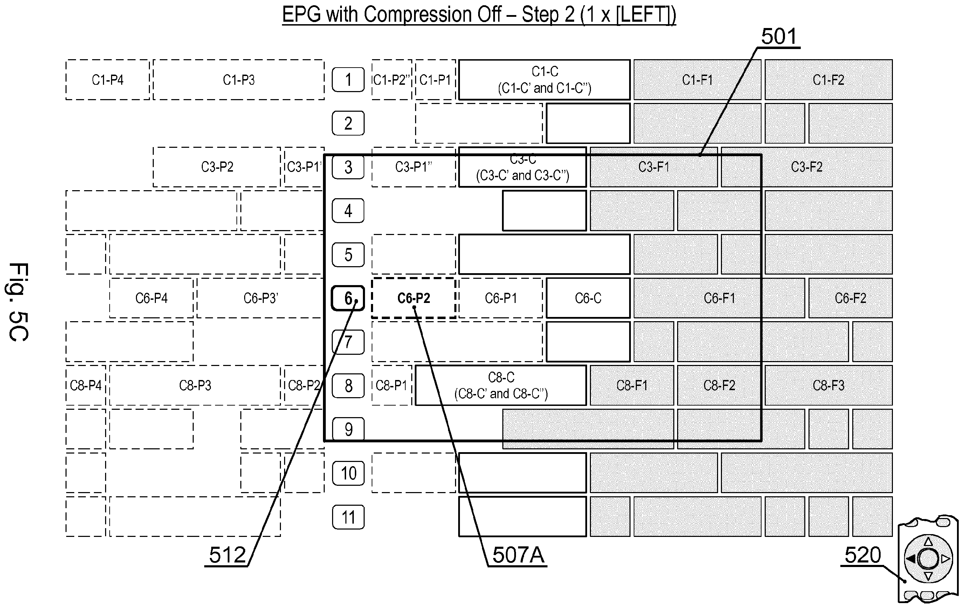

Fig. 5B, 5C show successive changes of position of the window 501 as the user presses a left arrow of the RCU, causing the focus 507A to move leftwards and the window 501 to shift leftwards (when the system is configured such that the focus is always at the left edge of the window).

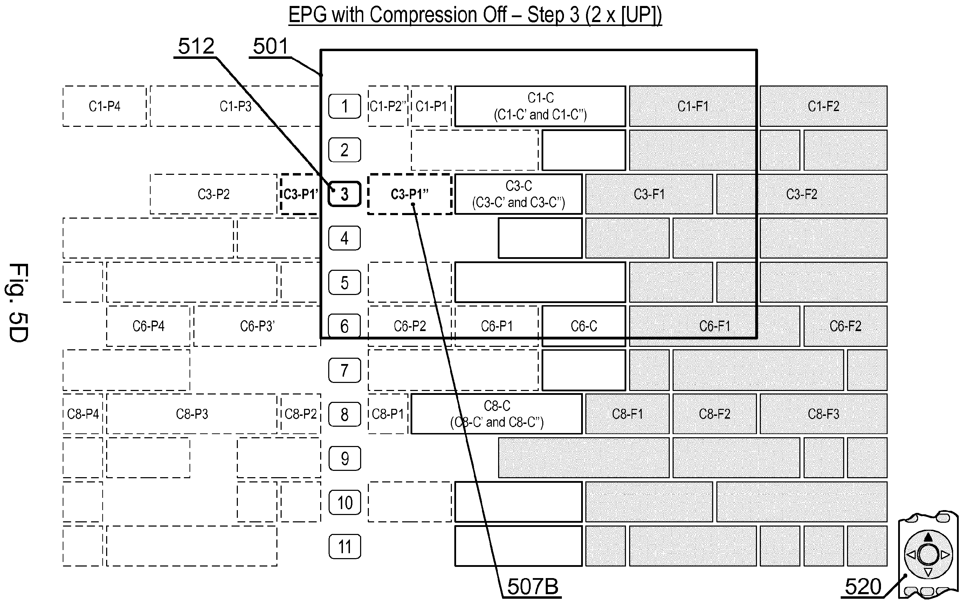

Fig. 5D shows a change from Fig. 5C after a user pressed the up arrow twice - the focus 507B was moved from channel 6 to channel 3, as there was a gap in channel 4.

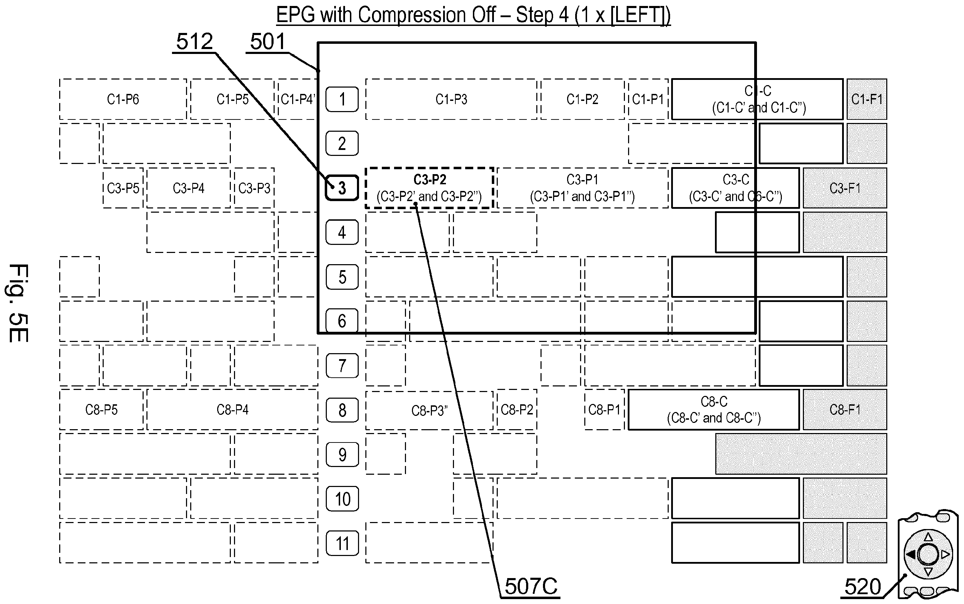

Fig. 5E shows a change from Fig. 5D after a user pressed the left arrow - the focus 507C was moved from event C3-P1 to C3-P2.

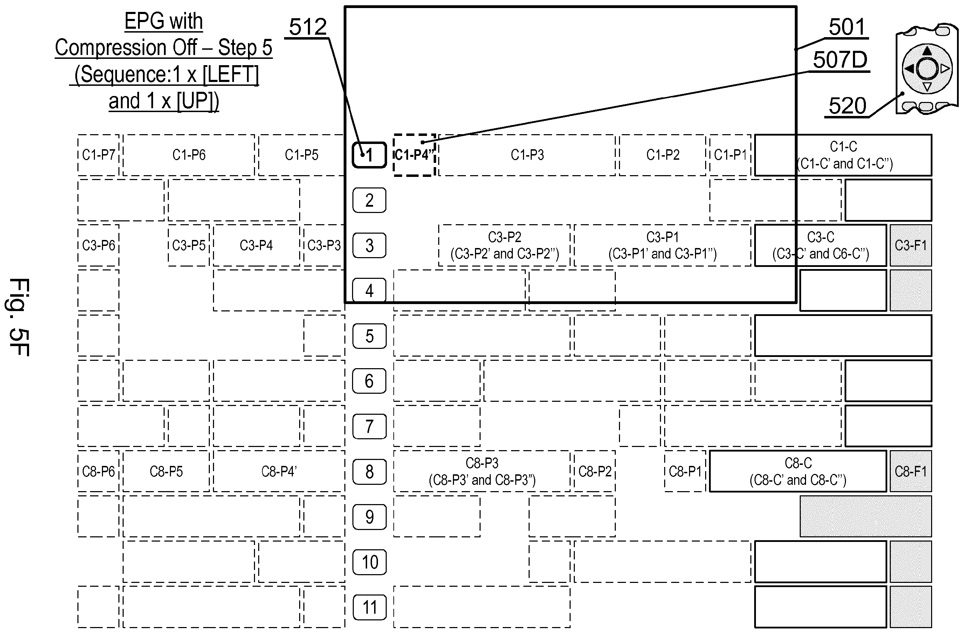

Fig. 5F shows a change from Fig. 5E after a user pressed the left arrow and the up arrow - the focus 507D was moved from channel 3 to channel 1, as there was a gap in channel 2, and to event C1-P4".

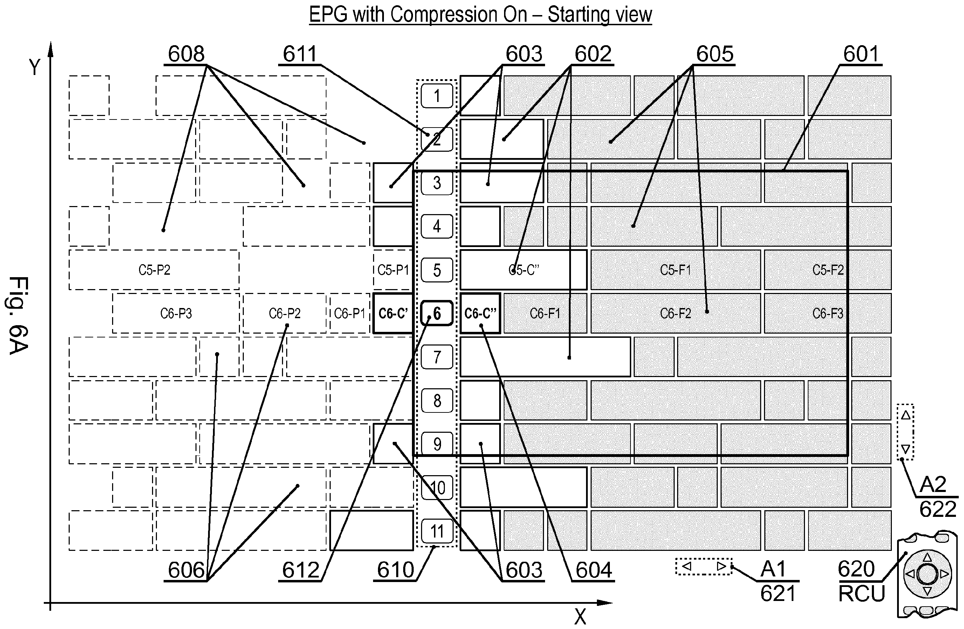

Figs. 6A-6G present examples of an EPG data display according to the present invention. References 601-622 are equivalent to references 501-522 of Figs. 5A-5F. Fig. 6A presents a starting view.

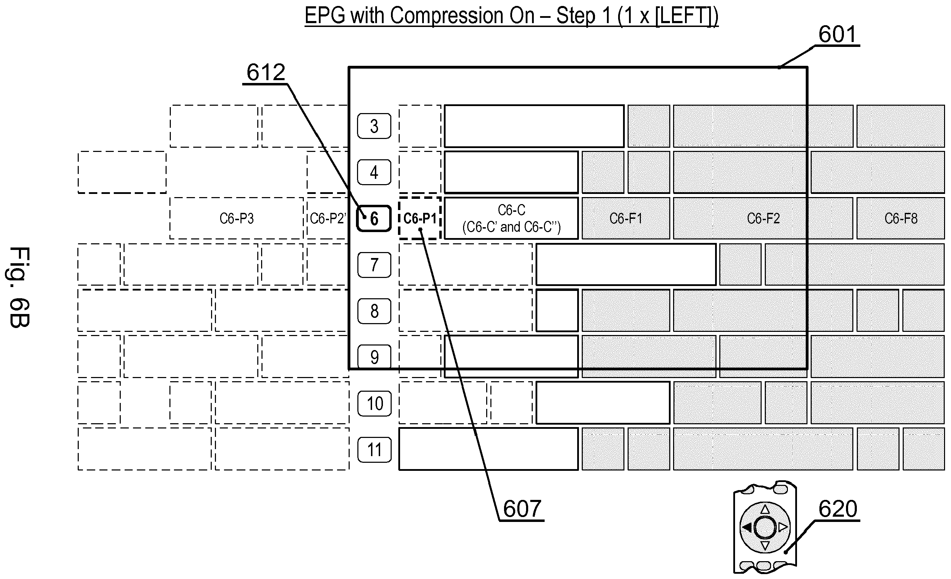

Fig. 6B shows a change from Fig. 6A after a user pressed the left arrow once - the focus 607 was moved to a leftwards past event C6-P1. Since at the time of the event C6-P1 there is a gap on channel 5, the row of channel 5 is hidden and channels 3, 4, 6, 7, 8, 9 are displayed in succession. There are also gaps on channels 1, 2 therefore channel 2 is not displayed as well (while channel 1 is outside the display window).

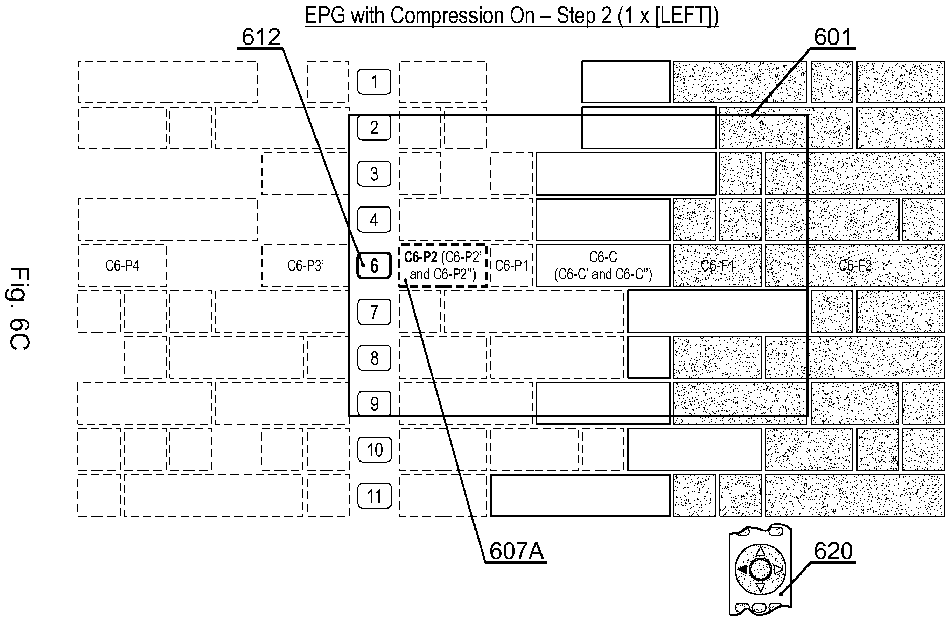

Fig. 6C shows a change from Fig. 6B after a user pressed the left arrow once - the focus 607A was moved to a leftwards past event C6-P2. Since at the time of the event C6-P2 there is still a gap on channel 5, the row of channel 5 is hidden. There is no gap any more, therefore channel 2 is displayed. Therefore, channels 2, 3, 4, 6, 7, 8, 9 are displayed in succession. Channel 6 has an event partially overlapping in time with C6-P2, therefore channel 6 is displayed.

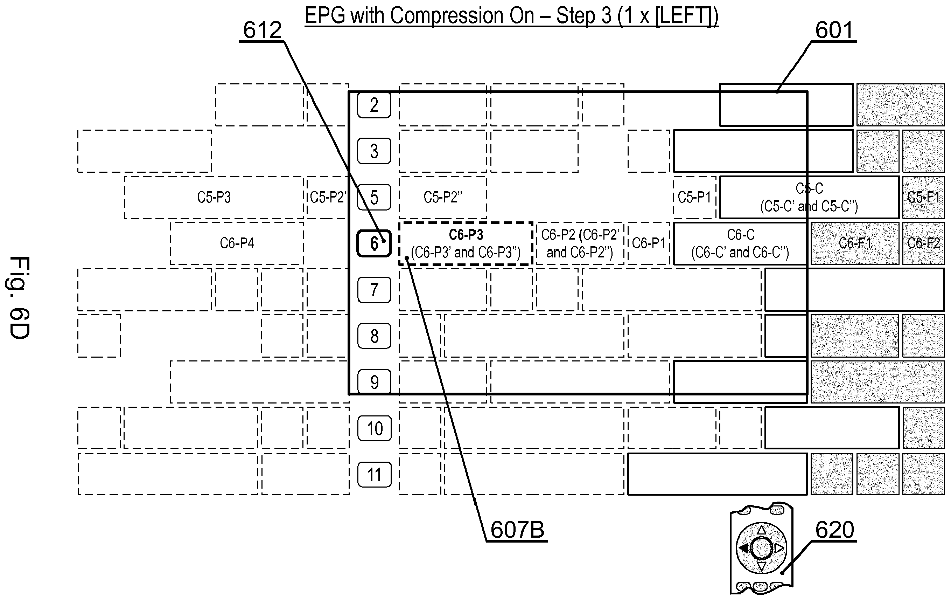

Fig. 6D shows a change from Fig. 6C after a user pressed the left arrow once - the focus 607B was moved to a leftwards past event C6-P3. Since at the time of the event C6-P3 there is a gap on channel 4, the row of channel 4 is hidden. Channel 1 comprises a gap, therefore the row if channel 1 is hidden from the overall grid as well (although currently it is outside the window 601). On the other hand, since there is an event available on channel 5, the row of channel 5 is displayed. Therefore, channels 2, 3, 5, 6, 7, 8, 9 are displayed in succession.

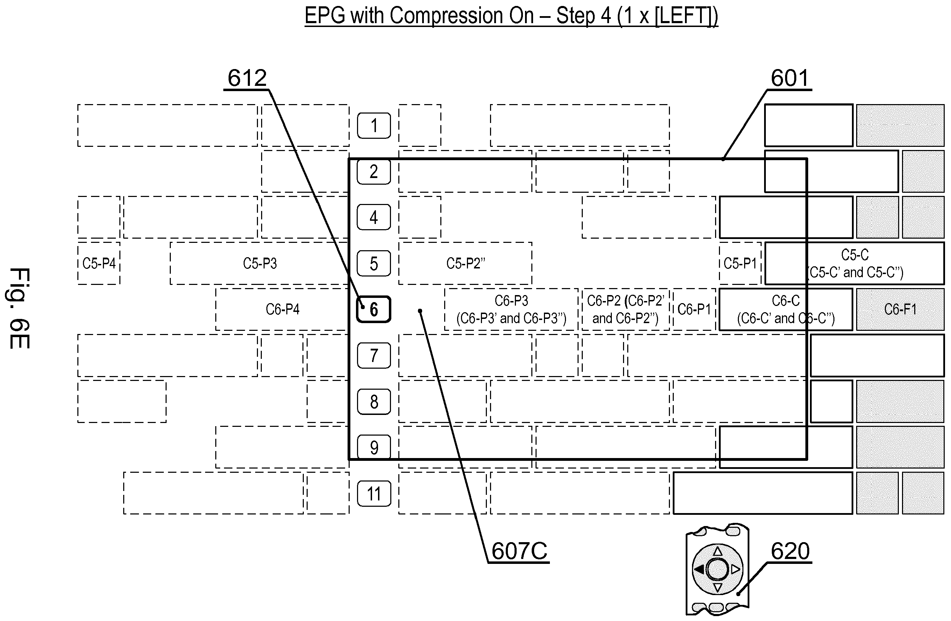

Fig. 6E shows a change from Fig. 6D after a user pressed the left arrow once - the focus 607C was moved to a leftwards gap between events C6-P4 and C6-P3. Since at the time of the gap there is a gap on channel 3, the row of channel 3 is hidden. Channel 10 also has a gap and therefore its row is hidden on the overall grid. On the other hand, since there is an event available on channel 4, the row of channel 4 is displayed. Therefore, channels 2, 4, 5, 6, 7, 8, 9 are displayed in succession.

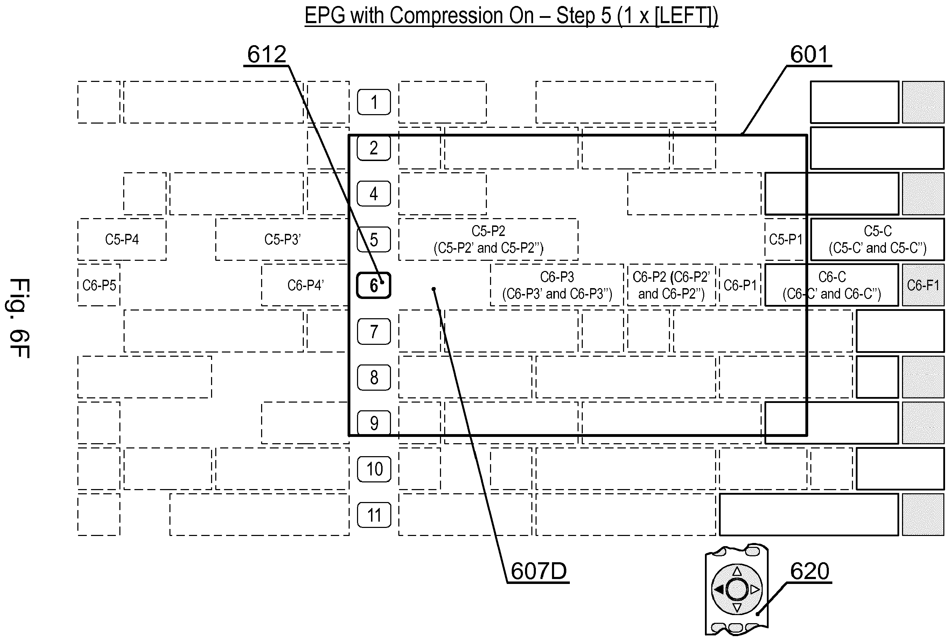

Fig. 6F shows a change from Fig. 6E after a user pressed the left arrow once - the focus 607D was moved to a further point in the gap between events C6-P4 and C6-P3. The example of Fig. 6E-6F assumes that the gap is e.g. 60 minutes long and the focus shift within the gap is set to 30 minutes - therefore, in order to shift the focus from event C6-P3 to C6-P4, two shifts along the gap must be made, i.e. the user has to press the left arrow twice. Allowing the user to move the focus within a gap on a currently selected channel prevents a situation wherein the user would become disoriented if a currently focused channel would be hidden (as other channels having gaps).

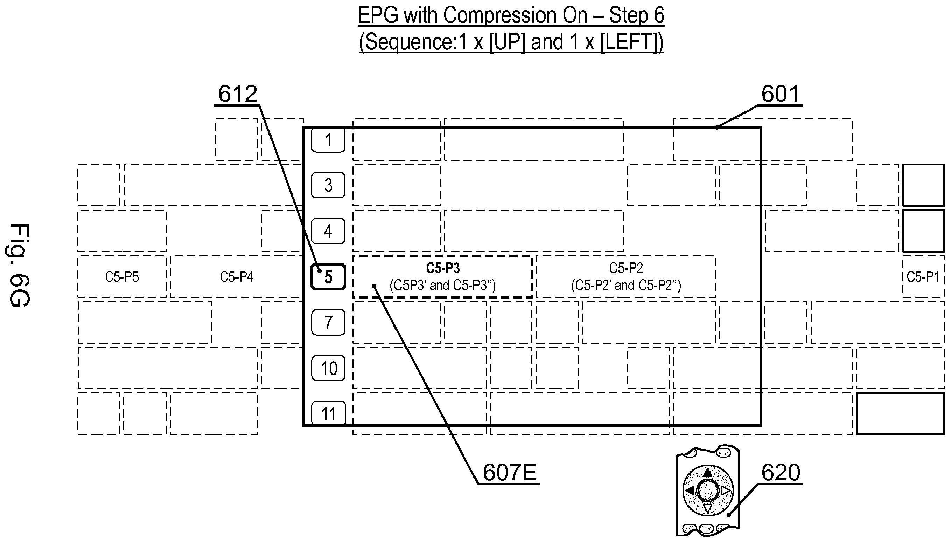

Fig. 6G shows a change from Fig. 6F after a user pressed the up arrow and the left arrow - the focus 607E was moved to event C5-P3. Since at the time of the gap there are gaps on channels 2, 6, 8 and 9, at the starting time of event C5-P3, the rows of those channels are hidden.

Therefore, while navigating through the grid, the EPG presentation unit 312 hides channels which do not comprise content description data for a currently selected focus position on the timeline. As a result, only channels for which events are cached for the currently selected focus position on the timeline are displayed. Therefore, the EPG data is displayed to the user as a clear and concise grid without empty spaces for the currently selected focus position on the timeline.

When a user indicates movement along the Y axis (e.g. by pressing up/down arrows of the RCU), the focus tool moves to the next higher or lower channel for which past events are cached and available for watching.

When a user indicates movement along the X axis (e.g. by pressing left/right arrows of the RCU), the focus tool moves to:
- the next previous or later event adjacent to the currently selected event;
- if there is no previous or later event adjacent to the currently selected event, the focus tool moves by a predetermined distance, e.g. 30 minutes or 1 hour.

Therefore, the EPG presentation unit 312 refreshes the grid during its navigation to hide and reveal particular channel rows.

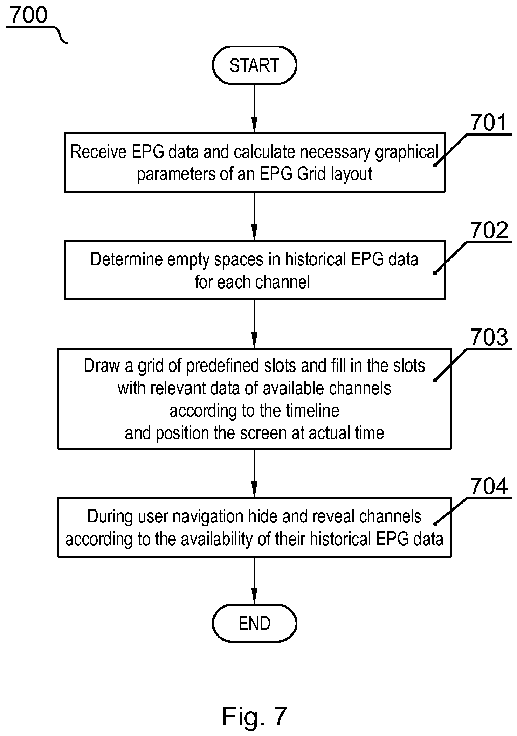

Fig. 7 presents a method for presentation of EPG data in a form of a grid as shown in Figs. 6A-6G. First, the availability of content items is determined and EPG data is received for the available content items and the necessary graphical parameters of the EPG grid layout, as shown in Figs. 6A-6G, are calculated in step 701, such as the screen size, number of items to be displayed etc. The EPG management unit analyses the received EPG data and determines empty spaces (gaps) in EPG data corresponding to each channel in step 702. The empty spaces may correspond to past events that are not cached or future events which are not accessible to the user. Next, the grid of predefined slots is drawn on the display in step 703 and filled with relevant data, according to the retrieved EPG data. Next, during user navigation through the EPG data, the EPG presentation unit (in cooperation with the EPG management unit) hides and reveals 704 channels according to the availability of their EPG data so that the EPG grid presented to the user does not contain any empty lines for channels for which no event is available.

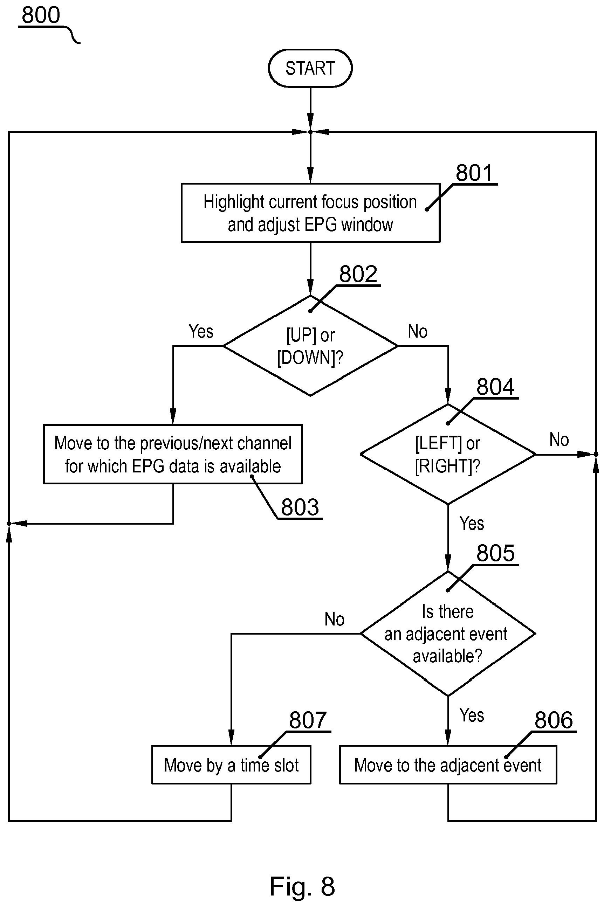

Fig. 8 presents a method for navigating via the grid of Fig. 6A-6G. First, in step 801, a current focus position 607 is highlighted and the window 601 is adjusted according to the current focus point. Next the system waits for user input. If the user inputs to navigate the grid vertically in step 802, the focus is moved to the previous or next channel, for which EPG data is available, in step 803. If the user inputs to navigate the grid horizontally in step 804, it is checked in step 805 whether there is an adjacent event available. If no adjacent event is available, the focus is moved in step 807 by a time slot, e.g. by a predetermined time slot of 30 minutes. Alternatively, if the available time till the next event is shorter than the predetermined slot, the focus may be moved to cover the remaining portion only or to cover the nearest event. If an adjacent event is available, the focus position is moved to that adjacent event in step 806.

One advantage of the presented method and system is that it reduces computing and memory resources (in particular, cache memory) necessary for storing the grid - by building the overall EPG with the rows of channels for which events are available in the currently focused time slot and discarding the rows of channels for which events are not available. This is particularly relevant for devices with limited resources, such as mobile devices or digital television set-top boxes.

It can be easily recognized, by one skilled in the art, that the aforementioned method for presentation of content may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for presenting and navigating content data in a device configured to receive a plurality of content events, the method comprising performing the following steps within the device:
- determining available events that can be received by the device and receiving, from a data provider (170) accessible over a network (190), content description data for the available events (701);
- determining (702) gaps in content description data;
- presenting (703) the content description data in a form of a grid having a timeline axis (X) and a channel axis (Y), wherein cells represent content events available on particular channel at particular time and are selectable by specifying a focus position (607); and
- allowing the user to navigate (704) via the grid, and displaying a current window (601) comprising a focus position (607) and surrounding cells, wherein the channels which do not comprise content description data for a currently selected focus position (607) on the timeline are hidden.

2. The method according to claim 1, wherein the available events comprise past events (Cn-Px) available from at least one of: a catch-up service (150), a local storage at the device (443) or other devices (231-233, 221-222, 241-243, 260) accessible via a network (210).

3. The method according to any of previous claims, comprising receiving from the user an input to navigate along the time axis (X) and, in case there is an adjacent event available, moving the focus position to the adjacent event (806) and otherwise moving the focus position by a selected time slot (807).

4. The method according to any of previous claims, comprising receiving from the user an input to navigate along the channel axis (Y) and moving the focus position to the next channel for which an event is available for the current focus position on the timeline (803).

5. A non-transitory computer readable storage medium comprising instructions that, when executed by a computer, enable generating a video stream in accordance with the method according to any of claims 1-4.

6. A device (230, 240) comprising:
- a network interface (320, 420) configured to allow communication with external services over a network (190);
- a controller (310, 410) configured to generate a graphical user interface;
- an EPG management unit (311, 411) configured to communicate with an EPG data provider (170) to receive content description data;
- an EPG presentation unit (312, 412) configured to:
- determine available events that can be received by the device and receiving, from a data provider (170) accessible over a network (190), content description data for the available events (701);
- determine (702) gaps in content description data;
- present (703) the content description data in a form of a grid having a timeline axis (X) and a channel axis (Y), wherein cells represent content events available on particular channel at particular time and are selectable by specifying a focus position (607); and
- allow the user to navigate (704) via the grid, and displaying a current window (601) comprising a focus position (607) and surrounding cells, wherein the channels which do not comprise content description data for a currently selected focus position (607) on the timeline are hidden.
